# EUROPEAN PATENT APPLICATION

(11) **EP 2 743 878 A1**
(43) Date of publication of application: **18.06.2014**
(21) Application number: 13196992.5
(22) Date of filing: 12.12.2013
(51) Int. Cl.: G06Q 30/02

(54) **Method and device for presenting advertisement information**

(30) Priority: 17.12.2012 KR 20120147726; 02.05.2013 KR 20130049616
(71) Applicant: Samsung Electronics Co., Ltd, Gyeonggi-do 443-742 (KR)
(72) Inventor: Moon, Min-jeong, Seoul (KR); Chang, Woo-yong, Gyeonggi-do (KR); Cho, Hyung-rae, Seoul (KR); Han, Chul-ho, Seoul (KR)
(74) Representative: Jenkins, Richard Gavin

(57) **Abstract**

A method and device for allowing an electronic device to output advertisement information while the electronic device is being charged by an external charging device is provided. A method of controlling the electronic device for presenting advertisement information includes operations of connecting with the external charging device for data communication; in response to an external charging device charging of a battery installing an application in the electronic device; in response to the external charging device being connected for the data communication; and outputting the advertisement information to the electronic device by using the application.

## Description

### RELATED APPLICATIONS

This application claims priority from Korean Patent Application No. 10-2012-0147726, filed on December 17, 2012, and Korean Patent Application No. 10-2013-0049616, filed on May 2, 2013, in the Korean Intellectual Property Office, the disclosures of which are incorporated herein by reference, in their entirety.

### BACKGROUND

### 1. Technical Field

One or more exemplary embodiments relate to a method of presenting advertisement information to a user; the method being performed by an electronic device having a battery.

### 2. Description of the Related Art

Due to an increase in use of various portable electronic devices, there is a requirement to frequently charge the portable electronic devices. To do so, various types of portable chargers were developed. However, the portable chargers are only used to charge the electronic devices and have to be carried, separately from the electronic devices, such that using the portable chargers is inconvenient.

Thus, in order to provide a charging device in various places, there is a demand for a method of allowing a charging device provider to obtain an advantage by providing the charging device.

### SUMMARY

One or more exemplary embodiments include a method and device for presenting advertisement information to a user of an electronic device while the user charges the electronic device by using an external charging device.

Additional aspects will be set forth in part in the description which follows and, in part, will be apparent from the description, or may be learned by practice of the exemplary embodiments.

According to one or more exemplary embodiments, a method of controlling an electronic device having a battery, the method performed by the electronic device, includes operations of connecting with the external charging device for data communication, in response to charging of the battery starting by an external charging device installing an application in the electronic device, in response to the external charging device being connected for the data communication; and outputting advertisement information to the electronic device by using the installed application.

The operation of outputting the advertisement information may include an operation of outputting the advertisement information that corresponds to user information related to a user of the electronic device.

The operation of outputting the advertisement information may include operations of analyzing the user information; requesting a server for advertisement information according to a result of the analyzing; and receiving the advertisement information from the server which corresponds to the user information, and outputting the advertisement information.

The operation of installing the application may include operations of receiving Uniform Resource Locator (URL) information for installing the application from the external charging device; and installing the application using the URL information.

The operation of outputting the advertisement information may include operations of predicting an output time of the advertisement information; and selecting advertisement information to be output, according to the predicted output time.

The operation of outputting the advertisement information may include an operation of outputting the advertisement information that is determined according to information related to remaining power of the electronic device.

The operation of outputting the advertisement information may include an operation of selecting the advertisement information according to information related to a position of the electronic device.

The information related to the position of the electronic device may be obtained by the electronic device via near field communication (NFC).

The method may further include an operation of transmitting user information related to a user of the electronic device to the external charging device, and the operation of outputting the advertisement information may include operations of receiving advertisement information related to the user information transmitted by the external charging device; and outputting the advertisement information.

The user information may include at least one of product purchase information related to a user of the electronic device, information related to applications installed in the electronic device, service account information, and information related to content reproduced by the electronic device.

The operation of outputting the advertisement information may further include operations of detecting connection with the external charging device in response to the connection with the external charging device being disconnected ; determining whether to delete the application according to a user input with respect to the advertisement information in response to the connection with the external charging device being disconnected; and deleting the application according to a result of the determination.

The operation of connecting may include an operation of connecting with the external charging device for data communication in response to an electromotive force having at least a predetermined value being applied to a charging circuit of the electronic device.

The electronic device may charge the battery by receiving energy from the external charging device.

The method may further include an operation of sharing the advertisement information with another electronic device.

According to one or more exemplary embodiments, a method of controlling an electronic device, the method performed by an external charging device that supplies power to the electronic device so as to provide information to the electronic device, the method includes operations of, connecting with the electronic device for data communication in response to charging of a battery of the electronic device starting by the external charging device transmitting information related to installation of an application to the electronic device in response to the external charging device connecting with the electronic device for data communication; receiving user information stored in the electronic device from the electronic device; and transmitting advertisement information to the electronic device, to be output by the electronic device, based on the received user information.

The operation of transmitting the advertisement information may include operations of transmitting the user information to a server; receiving from the server the advertisement information that is determined based on the transmitted user information; and transmitting the advertisement information to the electronic device.

The advertisement information may be selected based on the transmitted user information.

The user information may include at least one of information related to a position of the electronic device, information related to content stored in the electronic device, information related to content reproduced by the electronic device, user-preferred product information, and information related to applications installed in the electronic device.

According to one or more exemplary embodiments, a method of controlling an electronic device having a battery, the method performed by the electronic device, includes operations of receiving connection information for connection with an access point (AP) from the external charging device, in response to charging of the battery starting by an external charging device; performing data communication with the AP by using the connection information; installing an application related to the external charging device in the electronic device in response to the electronic device performing the data communication with the AP; and outputting advertisement information to the electronic device by using the installed application.

The operation of outputting the advertisement information may include an operation of outputting the advertisement information that corresponds to user information related to a user of the electronic device.

The operation of outputting the advertisement information may include operations of analyzing the user information; requesting a server for advertisement information according to a result of analyzing the user information; and receiving the advertisement information which corresponds to the user information from the server, and outputting the advertisement information.

The operation of receiving the connection information may include an operation of performing the data communication with the AP in response to an electromotive force having at least a predetermined value applied to a charging circuit of the electronic device.

According to one or more exemplary embodiments an electronic device enabled for data communication includes a battery that is rechargeable; a charging detector configured to detect whether charging of the battery starts by an external charging device; a communicator configured to perform data communication with the external charging device, and receiving advertisement information from the external charging device, in response to the charging detector detecting that charging of the battery has started; a display configured to output an image; and a controller configured to install an application in the electronic device in response to the electronic device performing data communication with the external charging device, and outputting the advertisement information to the display by using the installed application.

According to one or more exemplary embodiments an external charging device for supplying a power to an electronic device includes a communication connector configured to perform data communication with the electronic device in response to charging of a battery of the electronic device starting by the external charging device; an information transmitter configured to transmit advertisement information to the electronic device to be output ; and an information receiver configured to receive from the electronic device user information stored in the electronic device.

According to one or more exemplary embodiments, an electronic device enabled for data communication includes a battery that is rechargeable; a charging detector configured to detect whether charging of the battery an external charging device has started; a connection information obtainer configured to obtain from the external charging device connection information for connection with an access point (AP) when the charging detector detects that charging of the battery has started; a communicator configured to perform data communication with the AP by using the connection information, and receiving advertisement information via the AP; a display configured to output an image; and a controller configured to install an application in the electronic device using the data communication, and outputting the advertisement information to the display by using the application.

According to one or more exemplary embodiments, a non-transitory computer-readable recording medium includes a recorded program for executing the method of controlling an electronic device having a battery.

An aspect of an exemplary embodiment may provide an electronic device enabled for data communication and displaying advertisement information while a battery of the electronic device is being charged, the electronic device including: a battery that is rechargeable; a charging detector configured to detect whether an external charging device has started charging the battery; a communicator configured to receiving advertisement information from the external charging device, in response to the charging detector detecting that charging of the battery has started; a display configured to output an image; and a controller configured to install in the electronic device an application containing the advertising information in response to the electronic device performing the data communication with the external charging device, and outputting the advertisement information to the display by using the installed application.

The outputting of the advertisement information may include outputting advertisement information that corresponds to user information related to a user of the electronic device.

The electronic device may further include a connection information obtainer configured to obtain connection information from the external charging device for connection with an access point (AP), in response to the charging detector detecting that charging of the battery has started.

The electronic device may further include an information transmitter configured to transmit to the electronic device the advertisement information to be output to the display of the electronic device; and

an information receiver configured to receive from the electronic device user information stored in the electronic device

### BRIEF DESCRIPTION OF THE DRAWINGS

These and/or other aspects will become apparent and more readily appreciated from the following description of the exemplary embodiments, taken in conjunction with the accompanying drawings in which:
FIG. 1 illustrates an example in which an external charging device charges an electronic device;
FIG. 2 illustrates a control process performed by the electronic device, according to an exemplary embodiment;
FIG. 3 illustrates, in detail, the control process performed by the electronic device;
FIG. 4 illustrates an example in which the electronic device outputs advertisement information, according to an exemplary embodiment;
FIG. 5 illustrates a process by which the electronic device outputs advertisement information, according to an exemplary embodiment;
FIG. 6 illustrates a process by which the electronic device outputs advertisement information, according to another exemplary embodiment;
FIG. 7 illustrates a process by which the electronic device outputs advertisement information, according to another exemplary embodiment
FIG. 8 illustrates a structure of the electronic device, according to an exemplary embodiment;
FIG. 9 illustrates a control process performed by the electronic device, according to another exemplary embodiment;
FIG. 10 illustrates a structure of the electronic device, according to another exemplary embodiment;
FIG. 11 illustrates a control process performed by the external charging device, according to an exemplary embodiment;
FIG. 12 illustrates a structure of the external charging device, according to an exemplary embodiment;
FIG. 13 illustrates a system structure in which the electronic device shares advertisement information with another electronic device, according to an exemplary embodiment;
FIG. 14 illustrates an example in which the electronic device shares advertisement information with another electronic device, according to an exemplary embodiment;
FIG. 15 illustrates a process by which the electronic device shares advertisement information with another electronic device, according to an exemplary embodiment;
FIG. 16 is a flowchart of a process by which the electronic device determines whether to delete an application installed in the electronic device, according to an exemplary embodiment;
FIG. 17 illustrates an example in which the electronic device outputs advertisement information by using information obtained via near field communication (NFC), according to an exemplary embodiment;
FIG. 18 is a flowchart of a process by which the electronic device outputs advertisement information via an external display device, according to an exemplary embodiment;
FIG. 19 illustrates an example in which the electronic device outputs advertisement information via the external display device, according to an exemplary embodiment; and
FIG. 20 illustrates an example in which the electronic device outputs advertisement information, according to an exemplary embodiment.

### DETAILED DESCRIPTION OF THE EXEMPLARY EMBODIMENTS

Hereinafter, exemplary embodiments will be described in detail with reference to the attached drawings. The exemplary embodiments may, however, be embodied in many different forms, and should not be construed as being limited to the exemplary embodiments set forth herein. Rather, these exemplary embodiments are provided so that this disclosure will be thorough and complete, and will fully convey the concept of the exemplary embodiments to those skilled in the art. In the following description, well-known functions or constructions are not described in detail since they would obscure the exemplary embodiments with unnecessary detail, and like reference numerals in the drawings denote like or similar elements throughout the specification.

While terms "first" and "second" are used to describe various components, it is obvious that the components are not limited to the terms "first" and "second." The terms "first" and "second" are used only to distinguish between each of components.

Throughout the specification, it will be understood that when an element is referred to as being "connected to" or "coupled with" another element, it can be directly connected to or coupled with the other element, or it can be electrically connected to or coupled with the other element by having an intervening element interposed there between. Also, it will be understood that when an element is referred to as being "connected to" or "coupled with" another element, it can communicate with the other element by exchanging signals there between.

Also, when a part "includes" or "comprises" an element, unless there is a particular description contrary thereto, the part may further include other elements, not excluding the other elements.

Furthermore, all examples and conditional language recited herein are to be construed as being without limitation to such specifically recited examples and conditions. All terms including descriptive or technical terms which are used herein should be construed as having meanings that are obvious to one of ordinary skill in the art. However, the terms may have different meanings according to an intention of one of ordinary skill in the art, precedent cases, or the appearance of new technologies. Also, some terms may be arbitrarily selected by the applicant, and in this case, the meaning of the selected terms will be described in detail in the detailed description of the exemplary embodiments. Thus, the terms used herein have to be defined based on the meaning of the terms together with the description throughout the specification.

Throughout the specification, a singular form may include plural forms, unless there is a particular description contrary thereto. Also, terms such as "comprise" or "comprising" are used to specify existence of a recited form, a number, a process, an operation, a component, and/or groups thereof, not excluding the existence of one or more other recited forms, one or more other numbers, one or more other processes, one or more other operations, one or more other components and/or groups thereof.

Throughout the specification, the term "application" means a group of computer programs designed to perform particular tasks, based on connection between devices to be described at a later time. In the specification, the application may be of different types. For example, the application may be, but is not limited to, a game application, a musical instrument play application, a moving picture reproduction application, a map application, a broadcasting application, an exercise support application, a medical-use application, a payment application, a navigation application for transport units (e.g., a vehicle, a bus, an airplane, a ship, etc.), a surrounding device control application, and combinations thereof.

Throughout the specification, the expression "advertisement information is output to an electronic device" may not only refer to a case in which image content is displayed on a display of the electronic device but may also refer to a case in which a content file, including advertisement information in a different form such as voice content, is reproduced.

Reference will now be made in detail to exemplary embodiments, examples of which are illustrated in the accompanying drawings. As used herein, the term "and/or" includes any and all combinations of one or more of the associated listed items. Expressions such as "at least one of," when preceding a list of elements, modify the entire list of elements and do not modify the individual elements of the list.

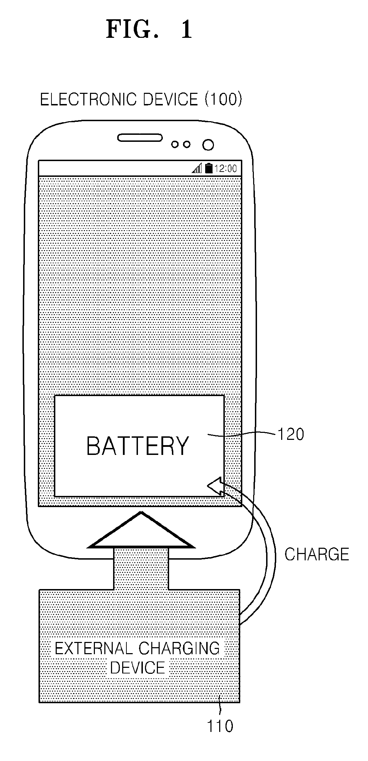

FIG. 1 illustrates an example in which an external charging device 110 charges an electronic device 100.

The electronic device 100 has a battery 120. The electronic device 100 may be embodied as one of various data communicable devices. For example, the electronic device 100 may be formed as one of various devices including, but is not limited to, a mobile phone, a smart phone, a notebook computer, a tablet personal computer (tablet PC), a hand-held PC, an electronic book terminal, a digital broadcasting terminal, a personal digital assistant (PDA), a portable multimedia player (PMP), a navigation device and a smart TV.

The external charging device 110 may supply a power to the electronic device 100 and therefore may charge the battery 120 of the electronic device 100. Here, the external charging device 110 may connect in a wired manner with a charging circuit of the electronic device 100 and may therefore supply the power. Also, the external charging device 110 may charge the battery 120 of the electronic device 100 by using a wireless charging method.

The external charging device 110 may supply the power to the battery 120 of the electronic device 100 by using various methods, including a long range power transfer method, a short range power transfer method, a contactless power transfer method, etc.

The long range power transfer method is used to transfer a power to a device in a range of several kilometers. The long range power transfer method is used to transfer a high-power energy by using a frequency in a several gigahertz (GHz) band. For example, the long range power transfer method includes an electromagnetic waves radiation method using a microwave in a 2.45 GHz band or a 5.8 GHz band. The electromagnetic waves radiation method involves transmitting high-frequency electromagnetic waves to a space by using a beam antenna, receiving the electromagnetic waves by using a receiving antenna, and obtaining a required power by connecting a rectifying semiconductor diode for conversion into direct-current (DC) power.

The short range power transfer method is used to transfer power to a device within a range of several tens of meters. In general, the short range power transfer method is used to transfer a low-power energy by using a frequency in a several tens to several hundreds of megahertz (MHz) band. For example, the short range power transfer method includes an electromagnetic resonant method for transferring electromagnetic waves energy between two resonators that are distant from each other. The electromagnetic resonant method allows a wireless power transfer in a range of several meters. A charging method using the electromagnetic resonant method involves transferring electromagnetic wave energy by using a resonant frequency. Also, energy may be transferred by using radio waves or ultrasound waves, other than through the magnetic resonant method.

The contactless power transfer method is used to transfer power to a device in a range of several millimeters to several tens of centimeters. In general, the contactless power transfer method involves transferring the power by using a magnetic induction method. A charging method using the magnetic induction method involves transferring the power due to electromagnetic induction that occurs between two coils.

The electronic device 100 and the external charging device 110 may exchange data by using at least one of communication methods. For example, the electronic device 100 and the external charging device 110 may exchange data via Bluetooth® communication, Ultra Wideband (UWB) communication, ZigBee® communication, or wireless local area network (wireless LAN, e.g., Wi-Fi) communication. However, one or more exemplary embodiments are not limited to the aforementioned types of communication.

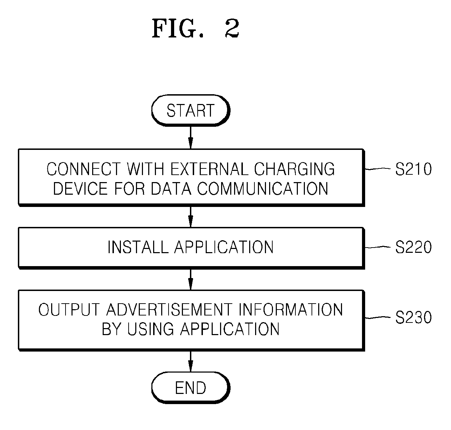

FIG. 2 illustrates a control process performed by the electronic device 100 according to an exemplary embodiment.

When the external charging device 110 starts charging the battery 120, the electronic device 100 may connect with the external charging device 110 for data communication (operation S210). Afterward, the electronic device 100 may install a predetermined application in electronic device 100.

The predetermined application may be an application for providing advertisement information via the electronic device 100, while the battery 120 of the electronic device 100 is charged. Also, the electronic device 100 may obtain and store user information or may transmit the user information to another device by using the application. For example, the electronic device 100 may output a user interface for receiving an input of user information by executing the application, and may obtain the user information via the user interface.

Throughout the specification, the user information may indicate profile information related to a user of the electronic device 100. For example, the user information may include user-preferred product information, product purchase information related to the user, service account information related to the user, information related to content reproduced by the electronic device 100, information related to content stored in the electronic device 100, information related to a list of applications installed in the electronic device 100, or the like. However, one or more exemplary embodiments are not limited to the aforementioned types of the user information. Also, the user information may include not only information stored in the electronic device 100 and information generated by the electronic device 100 but may also include information received from the external charging device 110. For example, in response to the user information including identifier (ID) information related to the external charging device 110 or information obtained by the external charging device 110 from a near field communication (NFC) tag, the advertisement information to be output to the electronic device 100 may be determined according to the ID information of the external charging device 110 or according to the information obtained by the external charging device 110 from the NFC tag.

The user-preferred product information may include user preference information with respect to a product. The product purchase information of the user may include information related to a product that the user purchased via the electronic device 100. The service account information of the user may include information that is necessary for the user to log in a service. Here, the service may include services such as a social network service (SNS), etc. that are provided via the electronic device 100. The information related to content reproduced by the electronic device 100 and the information related to content stored in the electronic device 100 may include information related to a content file such as a moving picture file that is reproduced by or stored in the electronic device 100.

Throughout the specification, the advertisement information indicates target information to be delivered to the user, via content including an image, a moving picture, a text and a sound. In the specification, the advertisement information may directly include content or may include a link to information for connecting to the content.

In an exemplary embodiment, the electronic device 100 may determine whether charging of the battery 120 starts, according to when an electromotive force having at least a predetermined value, is applied to a charging circuit for charging the battery 120. For example, in a case where the electronic device 100 has a charging circuit that charges the battery 120 by using an electromagnetic resonant method, the electronic device 100 may recognize that the charging of the battery 120 starts when the electromotive force having at least a predetermined value is applied to a coil included in the charging circuit.

In another exemplary embodiment, the electronic device 100 may output a user interface for receiving a user input with respect to the charging of the battery 120 and reception of the advertisement information, and then may determine whether the charging of the battery 120 starts according to the user input via the user interface. That is, when the user input indicates agreement by the user with respect to the charging of the battery 120 and the reception of the advertisement information, the electronic device 100 may determine that the charging of the battery 120 starts.

In addition to the aforementioned methods, the electronic device 100 may determine whether the charging of the battery 120 starts by using one of various methods that are embodied as hardware or software, or are embodied by combining hardware and software.

The electronic device 100 may be connected to the external charging device 110 in a wired manner or via wireless communication.

In an exemplary embodiment, as the charging of the battery 120 starts, the electronic device 100 may receive from the external charging device 110, via first wireless communication, information for connection of a second wireless communication and application installation information regarding an application related to the external charging device 110 from the external charging device 110. Afterward, the electronic device 100 may connect with the external charging device 110 via the second wireless communication, based on the information for connection of the second wireless communication. The electronic device 100 may install the application according to the application installation information and may execute the application.

The application installation information related to the external charging device 110 may be used to identify the application to be installed in the electronic device 100, as the external charging device 110 which connects with the electronic device 100. Thus, the electronic device 100 may determine whether the application is installed in the electronic device 100, by using the application installation information, and in response to the application being installed in the electronic device 100, the electronic device 100 may execute the application. For example, the application installation information may include at least one of application ID information and an application execution command.

The information for connection of the second wireless communication may include information related to a communication method that is available to the external charging device 110, and information for recognizing a position of the external charging device 110. The information for recognizing a position of the external charging device 110 may indicate information such as an internet protocol (IP) address that is used in recognizing a position of a device in a network. For example, if the external charging device 110 is capable of performing Bluetooth® communication, the information for connection of the second wireless communication may include a media access control address (MAC address) or an IP address of the external charging device 110.

The first wireless communication may be connected between the electronic device 100 and the external charging device 110 so as to allow the electronic device 100 to identify the external charging device 110 and to connect the second wireless communication. By identifying the external charging device 110, the electronic device 100 may recognize which wireless communication is available to the external charging device 110 and which application has to be executed by the electronic device 100. However, one or more exemplary embodiments are not limited thereto. The identifying of the external charging device 110 by the electronic device 100 may be included in communication connected between the electronic device 100 and the external charging device 110 so as to connect the second wireless communication. Also, the electronic device 100 and the external charging device 110 may exchange authentication information, via the first wireless communication.

The first wireless communication may be performed via short-range wireless communication such as NFC or Bluetooth Low Energy (BLE) communication. However, one or more exemplary embodiments are not limited thereto.

In the NFC, in response to a distance between the electronic device 100 and the external charging device 110 being within an NFC communicable range, the electronic device 100 and the external charging device 110 may exchange data. The electronic device 100 may read data stored in the external charging device 110 in the NFC manner. The external charging device 110 may transmit to the electronic device 100 a connection request signal, a connection acceptance signal, a connection notification signal, etc., which are stored in the external charging device 110. However, in another exemplary embodiment, the external charging device 110 may further transmit other information as well as the connection request signal, the connection acceptance signal, and the connection notification signal.

In the BLE communication, information is continuously broadcast. Thus, in response to the first wireless communication corresponding to the BLE communication, the external charging device 110 continuously broadcasts the application installation information regarding an application related to the external charging device 110, and connection information for connection with the external charging device 110, via the second wireless communication. In this case, the electronic device 100 includes a Bluetooth® communication function capable of receiving a signal broadcast by the external charging device 110.

The second wireless communication is connected between the electronic device 100 and the external charging device 110 so as to allow the electronic device 100 to execute a predetermined application and to exchange data with the external charging device 110. For example, the second wireless communication may include, but is not limited to, Bluetooth® communication, UWB communication, ZigBee® communication and Wi-Fi communication.

In an exemplary embodiment, the information for connection of the second wireless communication and the application installation information related to the external charging device 110 may include a manufacturer of the external charging device 110, a serial number of the external charging device 110, a software version of the external charging device 110, or the like, that are ID information and service information of the external charging device 110 that the electronic device 100 has to recognize.

However, one or more exemplary embodiments are not limited thereto, and in another exemplary embodiment, the electronic device 100 may connect with the external charging device 110 by using another method other than the aforementioned methods.

Afterwards, the electronic device 100 may output the advertisement information by using the application (operation S230).

The electronic device 100 may execute the application and may output the advertisement information by using the executed application. The advertisement information indicates information to be provided to the user as the external charging device 110 charges the battery 120 of the electronic device 100.

In an exemplary embodiment, the electronic device 100 may output the advertisement information that is selected, based on the user information of the electronic device 100, by using the installed application. For example, in response to the user information including information related to content that was reproduced in the electronic device 100, the electronic device 100 may output advertisement information related to the content that was reproduced in the electronic device 100. For example, the electronic device 100 may output advertisement information related to another music album of an artist whose music was reproduced in the electronic device 100.

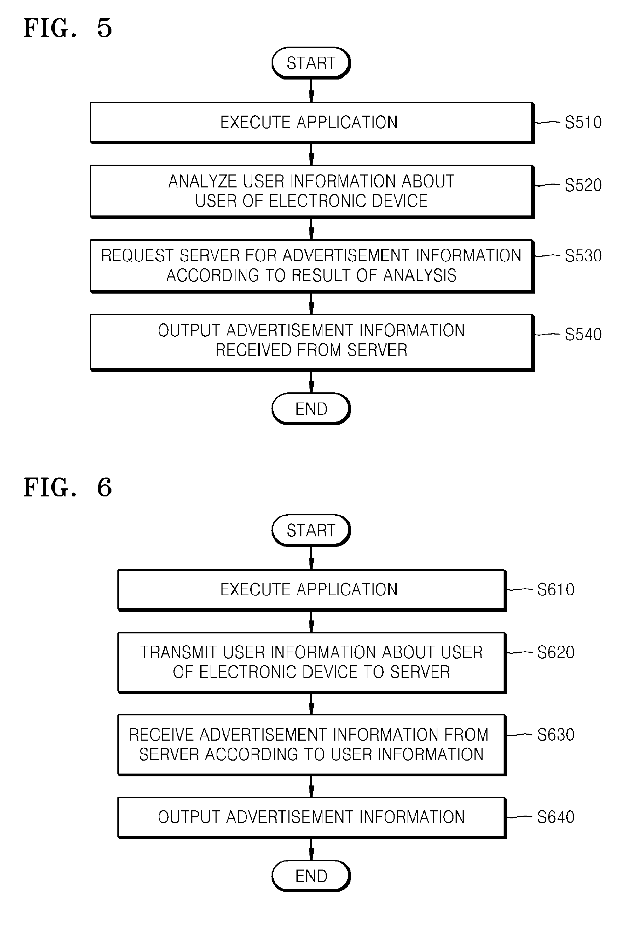

The electronic device 100 may obtain advertisement information from the external charging device 110, or from a server that stores a plurality of pieces of advertisement information. A procedure by which the electronic device 100 obtains and outputs the advertisement information will be described in detail with reference to FIGS. 5 through 7.

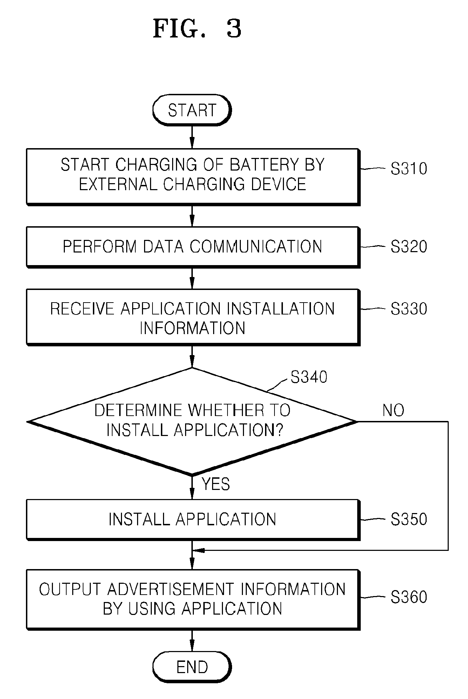

FIG. 3 illustrates in detail the control process performed by the electronic device 100.

In response to the electronic device 100 detecting that charging of the battery 120 starts by operation of the external charging device 110 (operation S310), the electronic device 100 performs data communication with the external charging device 110 (operation S320).

The electronic device 100 may receive application installation information from the external charging device 110 (operation S330). In response to the electronic device 100 receiving the application installation information, the electronic device 100 may determine whether to install an application which corresponds to the application installation information (operation S340). In response to the application which corresponds to the application installation information not being installed in the electronic device 100, the electronic device 100 may make a determination to install the application.

In response to the electronic device 100 determining to install the application which corresponds to the application installation information, the electronic device 100 installs the application which corresponds to the application installation information (operation S350). The application installation information may include Uniform Resource Locator (URL) information for installation of the application. The URL information for installation of the application may include information that indicates a position of an application installation file. The electronic device 100 may receive the URL information included in the application installation information, and may install the application by using the URL information. For example, the electronic device 100 may download the application installation file by referring to the URL information, and may install the application by executing the application installation file.

Afterward, the electronic device 100 may output advertisement information by using the application that is installed in the electronic device 100 (operation S360). In an exemplary embodiment, the electronic device 100 may predict an output time of the advertisement information. The output time of the advertisement information may indicate a time period in which the advertisement information is output using the application. For example, the electronic device 100 may determine to output the advertisement information until the charging of the battery 120 is complete, according to a remaining charging capacity of the battery 120 of the electronic device 100. In another exemplary embodiment, the electronic device 100 may receive an input regarding user information related to a charging service usage time by using the application, and may determine a time period to output the advertisement information, based on the input user information. Afterward, the electronic device 100 may select advertisement information to be output, according to the predicted output time. For example, in response to the predicted output time being 15 minutes, the electronic device 100 may select and may output advertisement information of which reproduction time corresponds to 15 minutes.

In an exemplary embodiment, the electronic device 100 may output advertisement information according to information related to remaining power of the battery 120 of the electronic device 100. In response to the remaining power of the battery 120 being low, the electronic device 100 may output advertisement information, including content that is reproduced while consuming a small quantity of battery power, and in response to the remaining power of the battery 120 being high, the electronic device 100 may output advertisement information including content that is reproduced while consuming a large quantity of battery power.

In another exemplary embodiment, the electronic device 100 may select and may output advertisement information according to information related to a position of the electronic device 100. The information related to a position of the electronic device 100 may be obtained by using one of various position recognition techniques or via short-range wireless communication such as NFC with another device. For example, when the electronic device 100 reads information from an NFC tag positioned at a grocery corner in a shopping center, the electronic device 100 may output advertisement information related to groceries.

In another exemplary embodiment, the electronic device 100 may output advertisement information by using a surrounding device connected to the electronic device 100. For example, the electronic device 100 may output sound included in the advertisement information via a speaker connected to the electronic device 100, or may output an image to an external display apparatus connected to the electronic device 100.

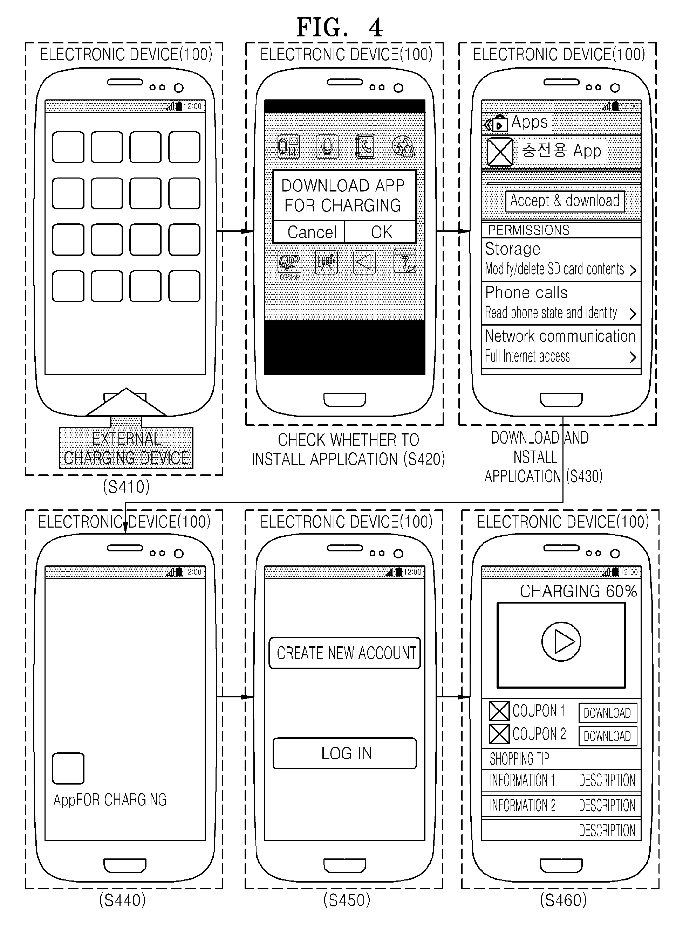

FIG. 4 illustrates an example in which the electronic device 100 outputs advertisement information, according to an exemplary embodiment.

First, the electronic device 100 connects with the external charging device 110 (operation S410). In response to the external charging device 110 being connected with the electronic device 100, the external charging device 110 transmits application installation information to the electronic device 100.

In response to the electronic device 100 receiving the application installation information, the electronic device 100 may output a user interface so as to ask a user whether to install an application, and therefore may check whether to install the application (operation S420).

In an exemplary embodiment, in response to the application related to the application installation information not being installed in the electronic device 100, the external charging device 110 may not charge the battery 120 of the electronic device 100.

In response to the electronic device 100 receiving a user input with respect to agreement with the installation of the application via the user interface, the electronic device 100 may download and may install the application (operation S430). In response to the application being installed, the electronic device 100 executes the application (operation S440).

Afterward, the electronic device 100 may create an account for a charging and advertisement providing service or may log in a user account for the charging and advertisement providing service (operation S450).

Then, the electronic device 100 may charge the battery 120 of the electronic device 100 and may simultaneously receive and output advertisement information via the logged-in charging and advertisement providing service (operation S460).

The charging and advertisement providing service is performed to charge the battery 120 of the electronic device 100 by using the external charging device 110, and to provide the advertisement information to the user who uses the external charging device 110.

FIG. 5 illustrates a process by which the electronic device 100 outputs advertisement information, according to an exemplary embodiment.

First, the electronic device 100 executes an application that corresponds to application installation information (operation S510). The application installation information may be received from the external charging device 110.

Afterward, the electronic device 100 may analyze user information related to a user of the electronic device 100 (operation S520), and may request a server for advertisement information, according to a result of the analysis (operation S530). The electronic device 100 outputs the advertisement information received from the server (operation S540).

In an exemplary embodiment, the analysis (operation S520) may be omitted. In this case, the electronic device 100 may analyze the user information related to the user of the electronic device 100 after the electronic device 100 receives all types of advertisement information from the server, and then, according to a result of the analysis, the electronic device 100 may select advertisement information to be output to the electronic device 100, from among all of the types of advertisement information.

FIG. 6 illustrates a process by which the electronic device 100 outputs advertisement information, according to another exemplary embodiment.

First, the electronic device 100 executes an application that corresponds to application installation information (operation S610). The application installation information may be received from the external charging device 110. Also, the electronic device 100 may receive connection information from the external charging device 110 for connection with a server. Here, the server may store or may collect one or more pieces of advertisement information.

The connection information for connection with the server is used by the electronic device 100 to perform communication with the server. For example, the connection information for connection with the server may include an IP address which indicates a position of the server.

Afterward, the electronic device 100 may connect with the server by using the information with respect to the server, and may transmit user information to the server related to a user of the electronic device 100 (operation S620). The server may select advertisement information according to the received user information. For example, when the user information includes preference information indicating a high preference for a hat, the server may select advertisement information related to the hat.

Then, the electronic device 100 receives the advertisement information that is selected by the server, according to the user information (operation S630), and outputs the advertisement information (operation S640).

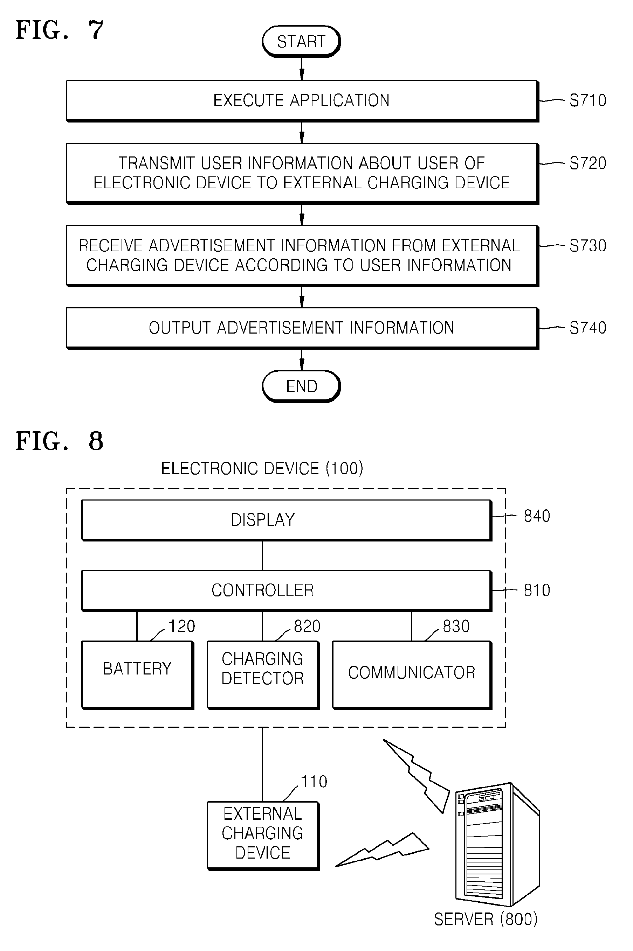

FIG. 7 illustrates a process by which the electronic device 100 outputs advertisement information, according to another exemplary embodiment.

First, the electronic device 100 executes an application that corresponds to application installation information (operation S710).

Then, the electronic device 100 may transmit to the external charging device 110 information related to a user of the electronic device 100 (operation S720). Before the user information is transmitted to the external charging device 110, the electronic device 100 may perform a process of authenticating the external charging device 110, by using the application. For example, the electronic device 100 may receive authentication information from the external charging device 110, and may determine whether the external charging device 110 is an authenticated device by using the application, according to the received authentication information.

Afterward, the external charging device 110 may select advertisement information to be output to the electronic device 100 according to the received user information, from among a plurality of pieces of advertisement information stored in the external charging device 110. Alternatively, the external charging device 110 may transmit the user information to a server and may select advertisement information to be output to the electronic device 100, from among a plurality of pieces of advertisement information stored in the server. The external charging device 110 may receive from the external charging device 110 the advertisement information that is selected according to the user information (operation S730). Then, the external charging device 110 outputs the advertisement information (operation S740).

FIG. 8 illustrates a structure of the electronic device 100, according to an exemplary embodiment.

The electronic device 100 may include the battery 120 that is rechargeable, a charging detector 820 that detects whether the battery 120 is charged, a communicator 830 that performs communication with the external charging device 110, a display 840 that outputs an image, and a controller 810 that controls each unit of the electronic device 100.

The battery 120 may supply a power to each unit of the electronic device 100. In an exemplary embodiment, the battery 120 may be a rechargeable battery formed as a secondary battery such as a lithium-ion battery, a lithium-polymer battery, or a nickel-metal hydride battery.

The charging detector 820 may detect whether charging of the battery 120 starts. For example, in response to an electromotive force having a value sufficient to charge the battery 120 being applied to a charging circuit for charging the battery 120, the charging detector 820 may determine that the charging of the battery 120 starts.

As the charging detector unit 820 detects that the charging of the battery 120 starts, the communicator 830 may perform data communication with the external charging device 110. The communicator 830 may perform communication with another device, via at least one network. For example, the communication unit 830 may perform communication via at least one of Bluetooth® communication, UWB communication, ZigBee® communication, NFC, and Wi-Fi communication.

The communicator 830 may receive information for connection of second wireless communication and application installation information via first wireless communication, using one of the aforementioned types of communication, and may connect with the external charging device 110 by using the information for connection of the second wireless communication. The first wireless communication may only be used in receiving the information for connection of the second wireless communication and the application installation information, and other pieces of data (e.g., advertisement information, user information, etc.) may be transmitted and received via the second wireless communication. However, one or more exemplary embodiments are not limited thereto.

In an exemplary embodiment, the communicator 830 may receive advertisement information via the external charging device 110. In another exemplary embodiment, the communicator 830 may receive from the external charging device 110, connection information for connection with a server 800, and may receive the advertisement information from the server 800, by using the connection information. The communicator 830 may transmit the user information to the external charging device 110 or to the server 800.

As the communicator 830 starts communication with the external charging device 110, the controller 810 may install an application, which corresponds to the application installation information, in the electronic device 100. The controller 810 may execute the application and may control the display 840 to output the advertisement information that is received, via the communicator 830.

In another exemplary embodiment, the controller 810 may output the advertisement information via another device other than the display 840.

In an exemplary embodiment, the display 840 may output the advertisement information. The display 840 may include a device capable of outputting an image. For example, the display 840 may have a liquid crystal display (LCD) panel, a light-emitting diode (LED) output screen, or the like.

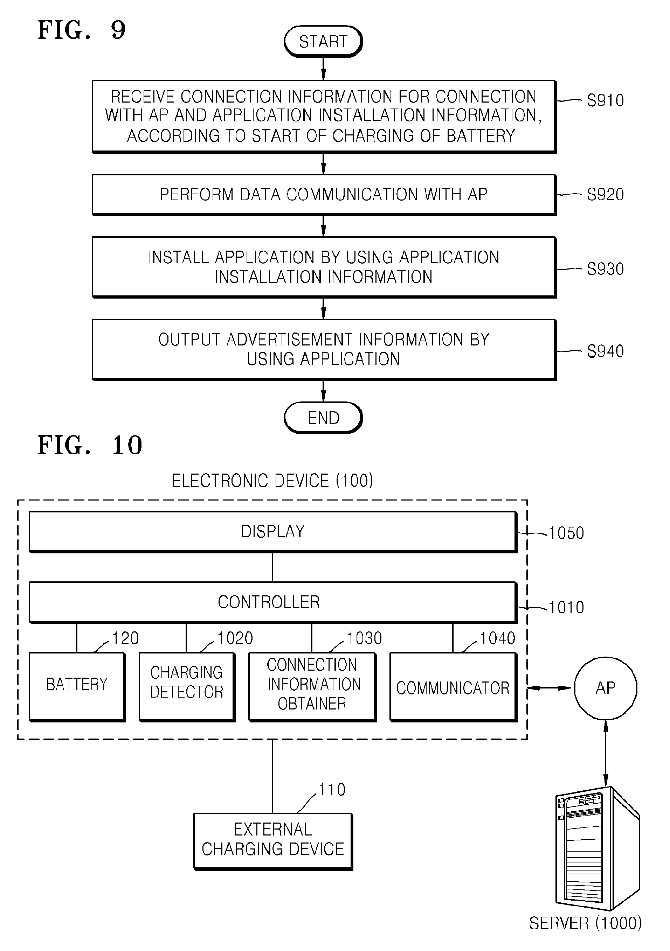

FIG. 9 illustrates a control process performed by the electronic device 100, according to another exemplary embodiment.

When charging of the battery 120 starts by the external charging device 110, the electronic device 100 may receive connection information for connection with an access point (AP) and application installation information from the external charging device 110 (operation S910). The connection information for connection with the AP is used by the electronic device 100 so as to connect with the AP. The connection information for connection with the AP may include a sub-system identification (SSID) and a connection password, with respect to the AP.

Afterward, the electronic device 100 may perform data communication with the AP by using the connection information for connection with the AP (operation S920). Then, the electronic device 100 may install an application that corresponds to the application installation information, by using the application installation information (operation S930). The electronic device 100 may download a file so as to install the application via the AP.

Afterward, the electronic device 100 may output advertisement information by using the application (operation S940). The electronic device 100 may receive the advertisement information from a server that provides the advertisement information via the AP. The electronic device 100 may connect with the server that is designated by the application, or may connect with the server by receiving connection information for connection with the server from the external charging device 110.

FIG. 10 illustrates a structure of the electronic device 100, according to another exemplary embodiment.

The electronic device 100 may include the battery 120 that is rechargeable, a charging detector 1020 that detects whether the battery 120 is charged, a connection information obtainer 1030 that obtains, from the external charging device 110 plurality of pieces of connection information for connection with an AP and a server 1000 a communicator 1040 that performs communication with the server 1000 via the AP, a display 1050 that outputs an image, and a controller 1010 that controls each unit of the electronic device 100.

The battery 120 may supply a power to each unit of the electronic device 100. The charging detector 1020 may detect whether charging of the battery 120 has started.

The connection information obtainer 1030 may receive at least one of connection information for connection with the AP and connection information for connection with the server 1000 from the external charging device 110. For example, when the connection information obtainer 1030 uses NFC, the electronic device 100 may read from the external charging device 110 via the NFC at least one of the connection information for connection with the AP and the connection information for connection with the server 1000, which are stored in the external charging device 110. In another embodiment, when BLE communication is used, the connection information obtainer 1030 may receive at least one of the connection information for connection with the AP and the connection information for connection with the server 1000 which are continuously broadcasted from the external charging device 110.

In an exemplary embodiment, the communicator 1040 may connect with the AP by using the connection information for connection with the AP which is obtained by the connection information obtainer 1030. For example, the communicator 1040 may connect with the AP via Wi-Fi communication by using SSID and a connection password of the AP, which are included in the connection information for connection with the AP. The communicator 1040 that connects with the AP may transmit at least one of user information and an advertisement information request to the server 1000 via the AP, and may receive advertisement information from the server 1000.

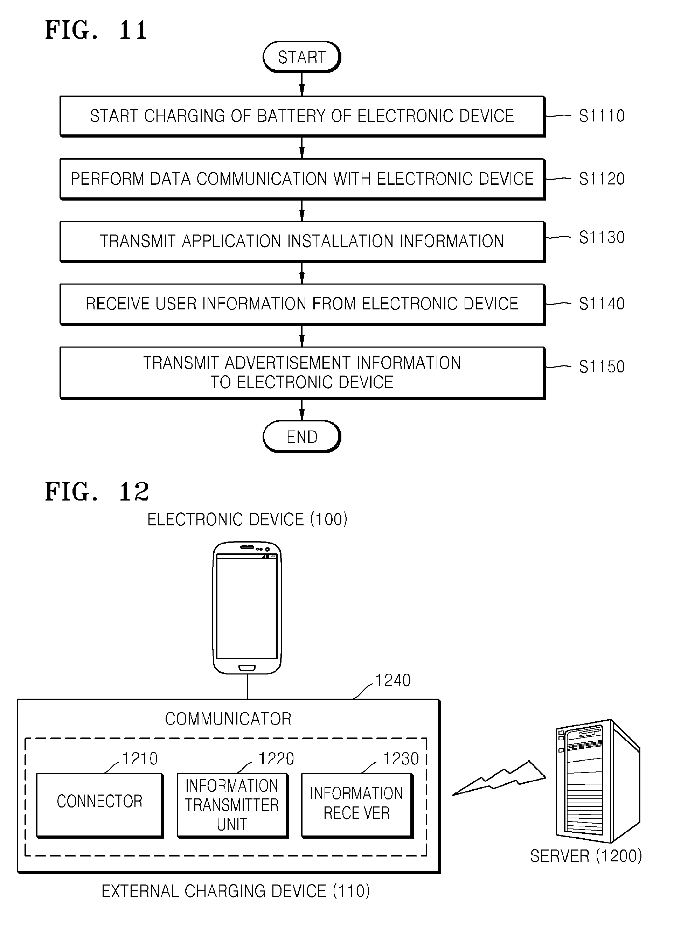

FIG. 11 illustrates a control process performed by the external charging device 110, according to an exemplary embodiment.

Because the external charging device 110 supplies a power to the battery 120 of the electronic device 100, charging of the battery 120 starts (operation S1110), so that the external charging device 110 performs data communication with the electronic device 100 (operation S1120).

Then, the external charging device 110 may transmit application installation information to the electronic device 100 (operation S1130). Because the application installation information is transmitted to the electronic device 100, the external charging device 110 may receive user information from the electronic device 100 in which an application that corresponds to the application installation information is installed (operation S1140).

After the external charging device 110 receives the user information, the external charging device 110 may transmit advertisement information to the electronic device 100, according to the received user information (operation S1150).

In an exemplary embodiment, the external charging device 110 may select the advertisement information to be output to the electronic device 100 from among a plurality of pieces of advertisement information stored in the external charging device 110, according to the user information. In another exemplary embodiment, the external charging device 110 may transmit the user information to a server so that the server may select the advertisement information according to the user information and then transmit the advertisement information to the electronic device 100.

FIG. 12 illustrates a structure of the external charging device 110, according to an exemplary embodiment.

The external charging device 110 functions to supply power to the electronic device 100 and may be embodied while combined with one of various types of a device including a portable charger, an audio dock, a shopping cart, a kiosk, or the like.

The external charging device 110 may include a communicator 1240 that includes a communication connector 1210 for performing data communication with the electronic device 100, an information transmitter 1220 for transmitting advertisement information to the electronic device 100, and an information receiver 1230 for receiving user information stored in the electronic device 100, from the electronic device 100.

In response to the electronic device 100 starting to charge the battery 120, the communication connector 1210 may perform data communication with the electronic device 100. For example, the communication connector 1210 may transmit connection information for connection with the external charging device 110 to the electronic device 100 via NFC or BLE communication, so that the electronic device 100 may connect with the external charging device 110.

The information receiver 1230 may receive the user information from the electronic device 100, and according to the user information, the information transmitter 1220 may transmit the advertisement information to the electronic device 100.

In an exemplary embodiment, the information transmitter 1220 may transmit the advertisement information to the electronic device 100, wherein the advertisement information is selected from among a plurality of pieces of advertisement information stored in the external charging device 110, according to the user information. In another, exemplary embodiment, the information transmitter 1220 may transmit the user information to the server 1200, so that the server 1200 may transmit the advertisement information to the electronic device 100.

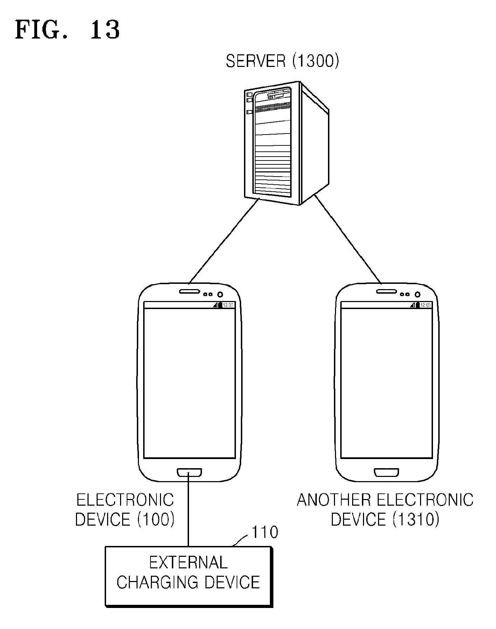

FIG. 13 illustrates a system structure in which the electronic device 100 shares advertisement information with another electronic device 1310, according to an exemplary embodiment.

In an exemplary embodiment, the electronic device 100 may output the advertisement information while the battery 120 of the electronic device 100 is charged by using the external charging device 110, and may share the advertisement information with the other electronic device 1310.

In a case where the electronic device 100 has information, such as a telephone number or an internet protocol (IP) address for directly identifying the other electronic device 1310, the electronic device 100 may directly identify the other electronic device 1310 to share the advertisement information, by using the information for identifying the other electronic device 1310. However, one or more exemplary embodiments are not limited thereto.

In another exemplary embodiment, in a case where the electronic device 100 has information for identifying the other electronic device 1310 via a service such as an SNS that is separate from an advertisement providing service, the electronic device 100 may identify the other electronic device 1310 to share the advertisement information, by using account information with respect to the separate service. In this case, the electronic device 100 may transmit user information to a server 1300, including the account information with respect to the separate service. The account information of the user may include at least one of account information used by the electronic device 100 so as to log in the service, and account information regarding an account to share the advertisement information.

After the server 1300 receives the user information, the server 1300 may transmit the advertisement information to the other electronic device 1310 that has logged in the account to share the advertisement information, according to the account information included in the user information.

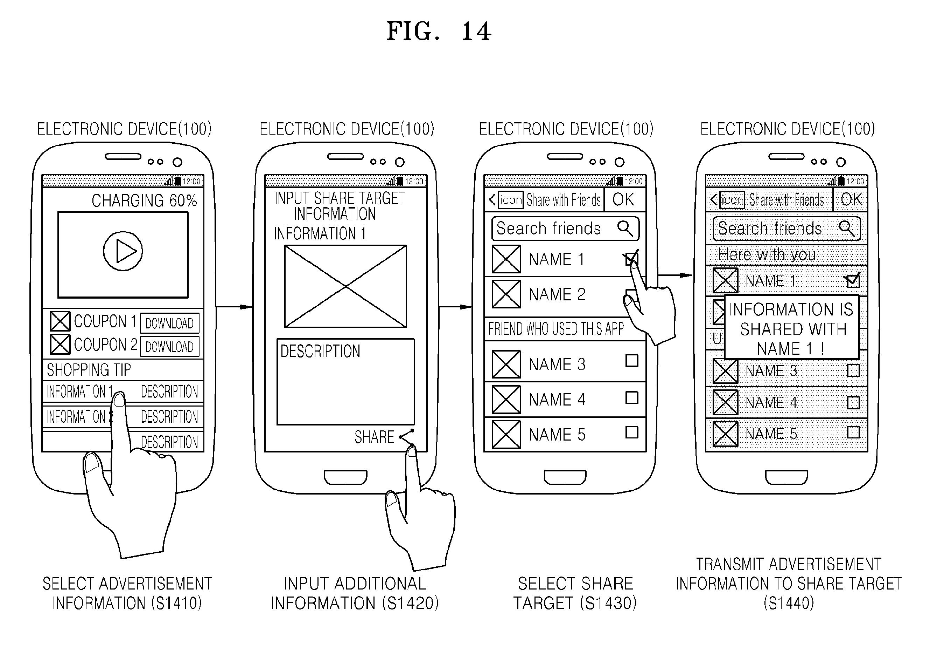

FIG. 14 illustrates an example in which the electronic device 100 shares advertisement information with another electronic device, according to an exemplary embodiment.

First, the electronic device 100 may select advertisement information from among a plurality of pieces of output advertisement information, which is to be transmitted to the other electronic device, according to a user input (operation S1410). Also, the electronic device 100 may output a user interface for receiving an input of additional information with respect to the advertisement information (operation S1420).

Afterward, the electronic device 100 may output a user interface for receiving an input of selecting a share target to receive the advertisement information and additional information related to the advertisement information (operation S1430). The electronic device 100 may transmit the advertisement information and the additional information related to the advertisement information to the share target that is selected in S1430 (operation S1440).

However, one or more exemplary embodiments are not limited to the example shown in FIG. 14.

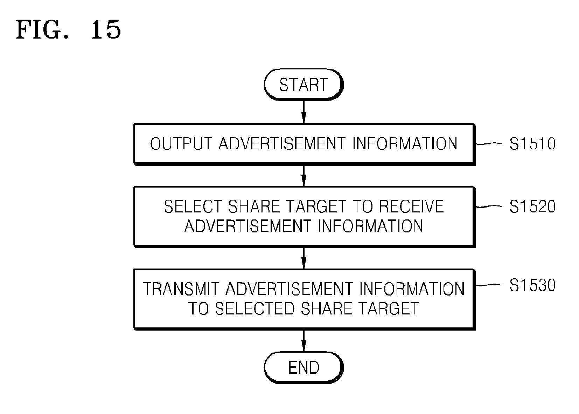

FIG. 15 illustrates a process by which the electronic device 100 shares advertisement information with another electronic device, according to an exemplary embodiment.

When the external charging device 110 starts charging the electronic device 100 the electronic device 100 may output advertisement information (operation S1510). Afterward, the electronic device 100 may select a share target to receive the advertisement information (operation S1520). The electronic device 100 may transmit the advertisement information to the selected share target (operation S1530).

Here, the share target is another electronic device capable of outputting the advertisement information. In operation S1530, the electronic device 100 may not only directly transmit the advertisement information to the other electronic device but may also indirectly transmit the advertisement information to the other electronic device by requesting a server transmit the advertisement information to the other electronic device.

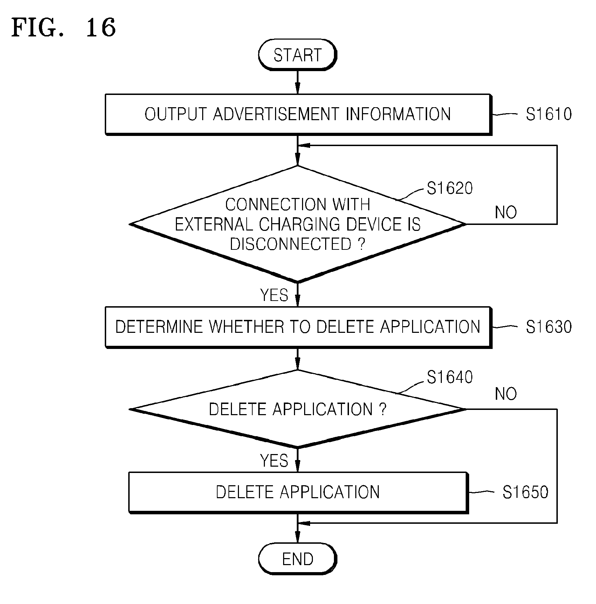

FIG. 16 is a flowchart of a process by which the electronic device 100 determines whether to delete an application installed in the electronic device 100, according to an exemplary embodiment.

When the external charging device 110 starts charging of the electronic device 100 the electronic device 100 outputs advertisement information (operation S1610).

Then, the electronic device 100 determines whether connection with the external charging device 110 is disconnected (operation S1620). The electronic device 100 may determine whether connection with the external charging device 110 is disconnected, according to whether charging of the battery 120 of the electronic device 100 is completed or whether a data communication connection with the external charging device 110 is ended. However, one or more exemplary embodiments are not limited thereto, and thus the determination with respect to disconnection between the electronic device 100 and the external charging device 110 may vary in other exemplary embodiments.

In response to connection with the external charging device 110 being ended, the electronic device 100 may determine whether to delete an application that corresponds to application installation information received from the external charging device 110 (operation S1630).

In an exemplary embodiment, when a user input occurs with respect to the advertisement information, the electronic device 100 may determine not to delete the application, in operation S1630.

In another exemplary embodiment, the electronic device 100 may output a user interface for receiving an input with respect to deletion of the application and may therefore determine whether to delete the application.

In operation S1630, in response to the electronic device 100 determining to delete the application that corresponds to the application installation information (operation S1640), the electronic device 100 may delete the application that corresponds to the application installation information (operation S1650).

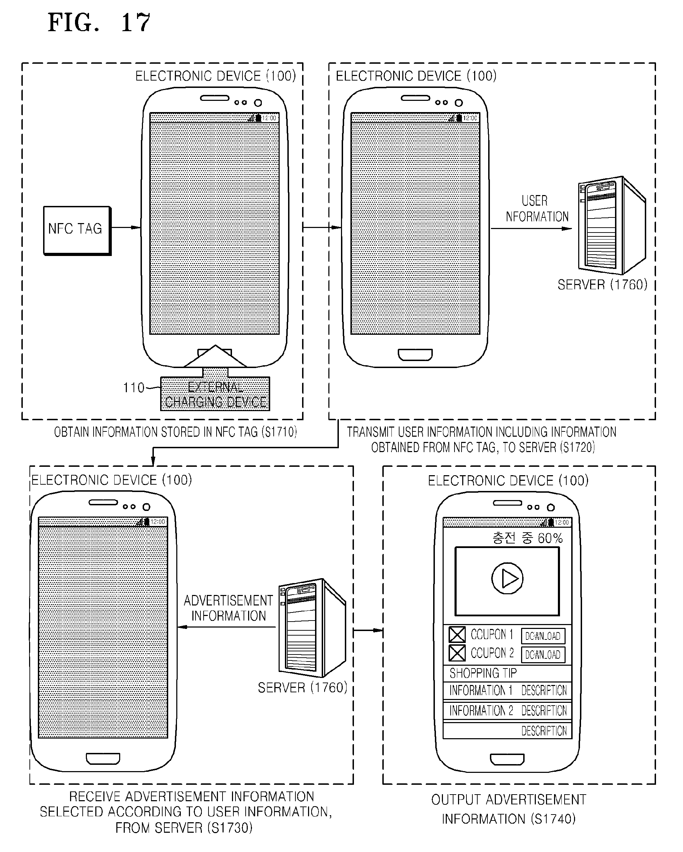

FIG. 17 illustrates an example in which the electronic device 100 outputs advertisement information by using information obtained via NFC, according to an exemplary embodiment.

When the external charging device 110 starts charging battery 120 of the electronic device 100, the electronic device 100 having an application installed therein may read information stored in an NFC tag 1750 via NFC (operation S1710).

Then, the electronic device 100 may transmit, to a server 1760, user information that includes the information obtained from the NFC tag 1750 (operation S1720). The server 1760 may select advertisement information according to the transmitted user information.

For example, in a case where the electronic device 100 transmits, to the server 1760, user information that includes information obtained from an NFC tag that is disposed in a fashion shop in a department store, the server 1760 may select fashion-related advertisement information.

Afterward, the electronic device 100 may receive the advertisement information selected according to the user information from the server 1760 (operation S1730), and may output the advertisement information (operation S1740).

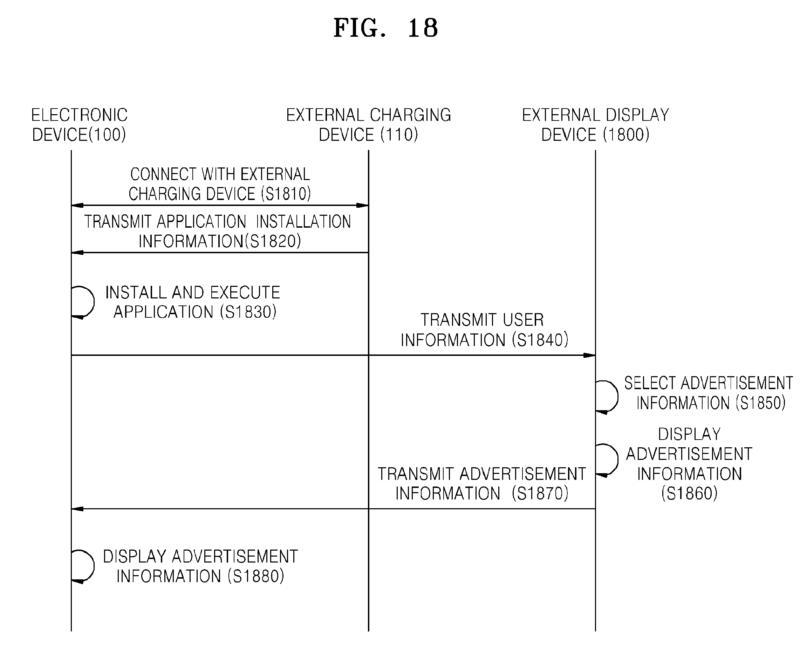

FIG. 18 is a flowchart of a process by which the electronic device 100 outputs advertisement information via an external display device 1800, according to an exemplary embodiment.

First, when the external charging device 110 starts charging the battery 120 of the electronic device 100, the electronic device 100 connects with the external charging device 110 (operation S1810).

Afterward, the electronic device 100 may receive application installation information from the external charging device 110 (operation S1820), and may install an application that corresponds to the application installation information and may execute the application (operation S1830).

The electronic device 100 may transmit user information to the external display device 1800 (operation S1840). The external display device 1800 is a device capable of performing communication with the electronic device 100 and outputting an image. For example, the external display device 1800 may be embodied as a projector including a data communication module or a large image displayer such as an LED display device.

In an exemplary embodiment, the external display device 1800 may be a device that is connected to the electronic device 100, separately from the external charging device 110. In another exemplary embodiment, the electronic device 100 may receive connection information for connection with the external display device 1800 from the external charging device 110, and may connect with the external display device 1800 by using the connection information for connection with the external display device 1800.

Afterward, the external display device 1800 may select advertisement information based on the user information (operation S1850), and may display the selected advertisement information (operation S1860). Also, the external display device 1800 may transmit the advertisement information to the electronic device 100 (operation S1870), and then the electronic device 100 may display the advertisement information (operation S1880).

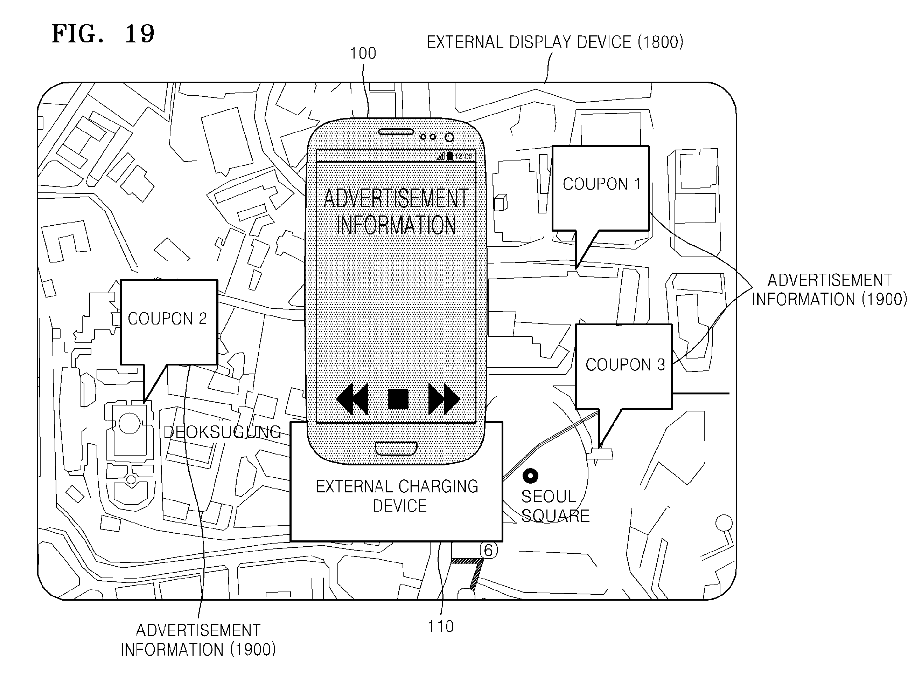

FIG. 19 illustrates an example in which the electronic device 100 outputs advertisement information 1900 via the external display device 1800, according to an exemplary embodiment.

As illustrated in FIG. 19, when the external charging device 110 starts charging battery 120 of the electronic device 100, the external display device 1800 may display the advertisement information 1900, based on user information received from the electronic device 100.

For example, in a case where the external display device 1800 is arranged in a library and the user information includes an ID with respect to a library server, the external display device 1800 may output a plurality of pieces of information related to books, according to a list of the books that were lent using the ID. For another example, the external display device 1800 may output a plurality of pieces of information related to restaurants in the vicinity the library.

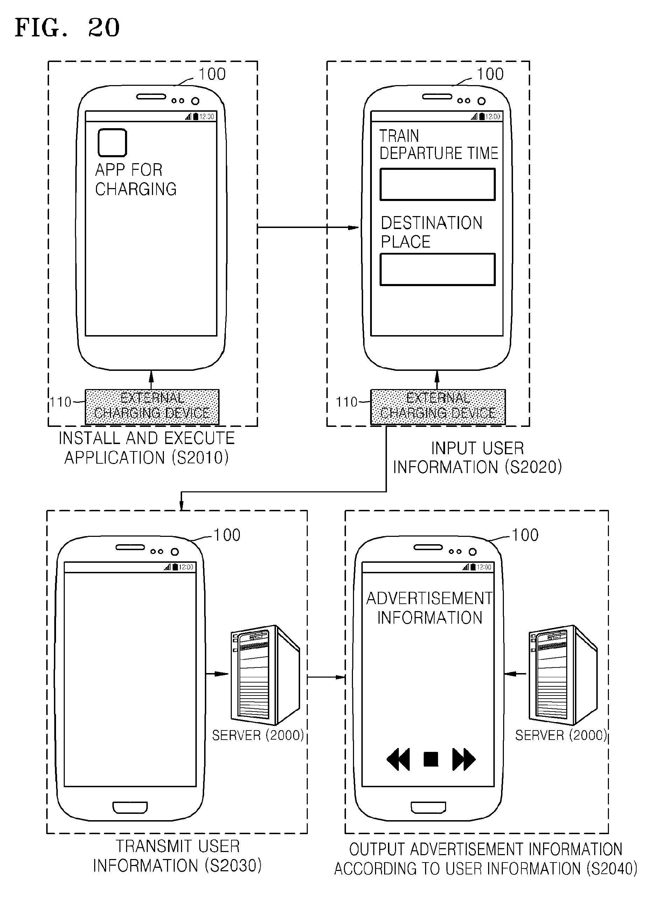

FIG. 20 illustrates an example in which the electronic device 100 outputs advertisement information, according to an exemplary embodiment.

In the example of FIG. 20, the electronic device 100 uses a charging and advertisement providing service by using the external charging device 110 that is arranged in a train waiting room. However, one or more exemplary embodiments are not limited to the exemplary embodiment shown in FIG. 20.

When the external charging device 110 starts charging battery 120 of the electronic device 100, the electronic device 100 connects with the external charging device 110. Then, the electronic device 100 may receive application installation information from the external charging device 110, and may install an application that corresponds to the application installation information (operation S2010).

The electronic device 100 may execute the application that corresponds to the application installation information and therefore may output a user interface for receiving an input of a train departure time and a destination place from a user. The electronic device 100 may receive an input of information related to the train departure time and the destination place, via the user interface (operation S2020).

Afterward, the electronic device 100 transmits user information to a server 2000 (operation S2030).

In an exemplary embodiment, the electronic device 100 may transmit, to the external charging device 110, the user information including the information related to the train departure time and the destination place, that are input to the electronic device 100. The external charging device 110 may transmit the user information to the server 2000.

After the server 2000 receives the user information, the server 2000 may select advertisement information based on the user information. For example, the server 2000 may select the advertisement information as a moving picture that has a reproduction time period between a current time and the train departure time. Alternatively, the server 2000 may select the advertisement information as information related to shops in the vicinity of the destination.

Then, the server 2000 may transmit the advertisement information to the external charging device 110. The external charging device 110 may transmit the advertisement information to the electronic device 100.

In this regard, operation S2030 may be differently embodied as in an exemplary embodiment in which the electronic device 100 may directly transmit or receive the user information and the advertisement information to or from the server 2000, without using the external charging device 110, or as in another exemplary embodiment in which the external charging device 110 does not transmit the user information to the server 2000 but rather directly selects advertisement information and transmits the advertisement information to the electronic device 100.

Afterward, the electronic device 100 may output the advertisement information (operation S2040).

The one or more exemplary embodiments may be embodied as a recording medium, e.g., a program module to be executed in computers, which include computer-readable commands. The computer storage medium may include any usable medium that may be accessed by computers, volatile and non-volatile medium, and detachable and non-detachable medium. Also, the computer storage medium may include a computer storage medium and a communication medium. The computer storage medium includes all of volatile and non-volatile medium, and detachable and non-detachable medium which are designed to store information, including computer readable commands, data structures, program modules or other data. The communication medium includes computer-readable commands, a data structure, a program module, and other transmission mechanisms, and includes other information transmission mediums.

It should be understood that the exemplary embodiments described therein should be considered in a descriptive sense only and not for purposes of limitation. Descriptions of features or aspects within each embodiment should typically be considered as available for other similar features or aspects in other exemplary embodiments. For example, configuring elements that are singular forms may be executed in a distributed fashion, and also, configuring elements that are distributed may be combined and then executed.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of controlling an electronic device having a battery, the method performed by the electronic device and comprising:
connecting with the external charging device for data communication in response to an external charging device starting to charge the battery;
installing an application in the electronic device in response to the external charging device being connected for the data communication, and
outputting advertisement information to the electronic device using the installed application.

2. The method of claim 1, wherein the outputting of the advertisement information comprises outputting the advertisement information that corresponds to user information related to a user of the electronic device.

3. The method of claim 2, wherein the outputting of the advertisement information comprises:
analyzing the user information;
requesting a server for advertisement information, according to a result of the analyzed user information; and
receiving from the server the advertisement information which corresponds to the user information, and outputting the advertisement information.

4. The method of claim 1, wherein the installing of the application comprises:
receiving Uniform Resource Locator (URL) information for installing the application from the external charging device; and
installing the application by using the received URL information.

5. The method of claim 1, wherein the outputting of the advertisement information comprises outputting the advertisement information that is determined according to information related to power remaining in the electronic device.

6. The method of claim 1, wherein the outputting of the advertisement information comprises selecting the advertisement information according to information related to a position of the electronic device.

7. The method of claim 1, further comprising transmitting to the external charging device user information related to a user of the electronic device, and
wherein the outputting of the advertisement information comprises:
receiving advertisement information related to the user information transmitted by the external charging device; and
outputting the advertisement information.

8. The method of claim 7, wherein the user information comprises at least one of product purchase information of a user of the electronic device, information related to applications installed in the electronic device, service account information, and information related to content reproduced by the electronic device.

9. The method of claim 1, wherein the outputting of the advertisement information further comprises:
detecting that a connection with the external charging device is disconnected;
in response to the connection with the external charging device being disconnected, determining whether to delete the application according to a user input with respect to the advertisement information; and
deleting the application according to a result of the determination.

10. A method of controlling an electronic device, the method performed by an external charging device that supplies power to the electronic device so as to provide information to the electronic device, the method comprising:
connecting with the electronic device for data communication in response to the external charging device starting to charge a battery
transmitting information to the electronic device related to installation of an application; in response to the external charging device connecting with the electronic device for data communication;
receiving from the electronic device user information stored in the electronic device; and
transmitting advertisement information to be output to the electronic device, based on the received user information.

11. The method of claim 10, wherein the user information comprises at least one of information related to a position of the electronic device, information related to content stored in the electronic device, information related to content reproduced by the electronic device, user-preferred product information and information related to applications installed in the electronic device.

12. An electronic device enabled for data communication comprising:
a battery that is rechargeable;
a charging detector configured to detect whether charging of the battery by an external charging device is started;
a communicator configured to perform data communication with the external charging device, and receiving advertisement information from the external charging device, in response to the charging detector detecting that charging of the battery has started;
a display configured to output an image; and
a controller configured to install an application in the electronic device in response to the electronic device performing the data communication with the external charging device, and outputting the advertisement information to the display by using the installed application.

13. An external charging device for supplying a power to an electronic device, the external charging device comprising:
a communication connector configured to perform data communication with the electronic device, in response to the external charging device starting to charge a battery of the electronic device;
an information transmitter configured to transmit to the electronic device advertisement information to be output to the electronic device; and
an information receiver configured to receive from the electronic device user information stored in the electronic device.

14. An electronic device enabled for data communication, the electronic device comprising:
a battery that is rechargeable:
a charging detector configured to detect whether an external charging device starts charging the battery;
a connection information obtainer configured to obtain connection information for connection with an access point (AP) from the external charging device in response to the charging detector detecting that charging of the battery has started;
a communicator configured to perform data communication with the AP by using the connection information, and receiving advertisement information via the AP;
a display configured to output an image; and
a controller configured to install an application in the electronic device using the data communication, and outputting the advertisement information to the display by using the installed application.

15. An electronic device enabled for data communication and displaying advertisement information while a battery of the electronic device is being charged, the electronic device comprising:
a battery that is rechargeable;
a charging detector configured to detect whether an external charging device has started charging the battery;
a communicator configured to receiving advertisement information from the external charging device, in response to the charging detector detecting that charging of the battery has started;
a display configured to output an image; and
a controller configured to install in the electronic device an application containing the advertising information in response to the electronic device performing the data communication with the external charging device, and outputting the advertisement information to the display by using the installed application.
